# EUROPÄISCHE PATENTANMELDUNG

(11) **EP 3 120 917 A1**
(43) Veröffentlichungstag der Anmeldung: **25.01.2017**
(21) Anmeldenummer: 15177740.6
(22) Anmeldetag: 21.07.2015
(51) Int. Cl.: B01D 46/00, B01D 46/52, B01D 29/11, B01D 29/21, B01D 29/23, B01D 29/33

(54) **FILTERPATRONE MIT SCHWEISSNAHT**

(71) Anmelder: Carl Freudenberg KG, 69469 Weinheim (DE)
(72) Erfinder: Schulz, Karsten, 74924 Neckarbischofsheim (DE); Hirsch, Georg, 76698 Ubstadt- Weiher (DE); Krahmer, Andreas, 68165 Mannheim (DE); Kaffenberger, Rainer, 64385 Reichelsheim (DE); Wiegand, Hans, 64658 Fuerth (DE)

(57) **Zusammenfassung**

Eine Filterpatrone, umfassend ein gefaltetes Filtermedium (1), welches zumindest bereichsweise zu einem Prisma geformt ist und zwei Endfalten (2, 3) aufweist, die miteinander verbunden sind, ist im Hinblick auf die Aufgabe, eine sichere Verbindung der Endfalten einer Filterpatrone zu erreichen, die dauerhaft oder zyklisch belastet wird, nämlich insbesondere durch Druckstoßabreinigung belastet wird, dadurch gekennzeichnet, dass die Endfalten (2, 3) einander überlappen.

## Beschreibung

### Technisches Gebiet

Die Erfindung betrifft eine Filterpatrone gemäß dem Oberbegriff des Patentanspruchs 1.

### Stand der Technik

Filterpatronen weisen ein Filtermedium auf, welches einen Hohlraum umfängt. Der Hohlraum hat zumindest eine Öffnung, in welche Druckluft eingeblasen werden kann. Die Filterpatronen weisen ein plissiertes bzw. gefaltetes Filtermedium auf, welches zur Ausbildung eines prismenförmigen Körpers an Endbereichen verschweißt oder verklebt sein kann.

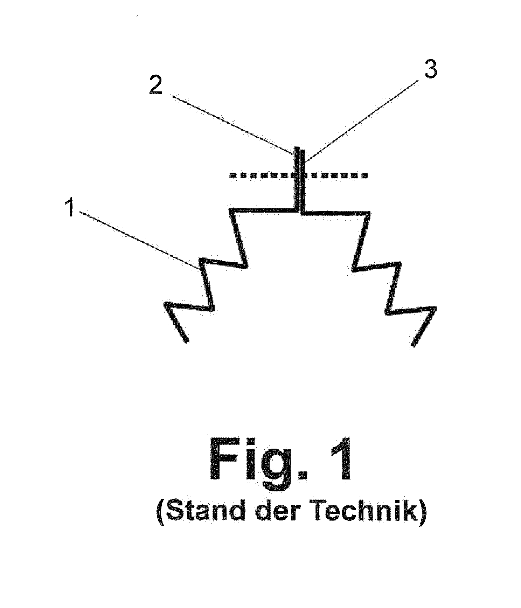

Solche Filterpatronen zur Filterung von Luft enthalten als Herzstück ein sternförmig angeordnetes Filtermedium, welches aus flachem Filtermedium konfektioniert wird. Neben dem Falten bzw. Plissieren und der Faltenausrichtung ist ein wesentlicher Prozessschritt der Konfektionierung das Verbinden der Endfalten eines plattenförmigen Faltenbalges zu einem Prisma. Eine Filterpatrone kann eine relativ geringe Druckstoßfestigkeit aufweisen, wenn zwei Endfalten "Rücken-an Rücken" liegend miteinander verklebt sind und sich gemeinsam in radialer Richtung erstrecken, wie in Fig. 1 dargestellt.

Aus der DE 10 2012 015 876 A1 und der DE 101 35 421 A1 sind zwar Ultraschallschweißverfahren bekannt. Jedoch haben Experimente gezeigt, dass ultraschallverschweißte Endfalten, die "Rücken-an-Rücken" liegen, Festigkeitswerte zeigen, die nicht den Anforderungen und Festigkeitswerten entsprechen, die mit einer Klebung erreicht werden können.

Zwar sind Klebetechniken zum Verbinden von überlappenden Endfalten von Faltenbälgen bekannt, jedoch besteht ein Bedarf, eine solche Überlappung prozesssicher anwenden zu können.

Dabei muss eine technisch sichere Verbindung des Filtermediums erzeugt und gewährleistet werden, da diese in der Anwendung teilweise mehrere Jahre lang mechanischen Beanspruchungen ausgesetzt ist.

Je nach Filtrationsaufgabe werden in der Praxis sehr unterschiedliche Filtermedien eingesetzt. Daher muss ein entsprechendes Verfahren zum Verbinden der Endfalten ermöglichen, verschiedene Filtermedien mit teilweise sehr unterschiedlichen physikalischen Eigenschaften prozesssicher zu verarbeiten. Eine solche Verbindung kann mittels einer Klebetechnologie erzeugt werden.

### Darstellung der Erfindung

Der Erfindung liegt die Aufgabe zugrunde, eine sichere Verbindung der Endfalten einer Filterpatrone zu erreichen, die dauerhaft oder zyklisch belastet wird, nämlich insbesondere durch Druckstoßabreinigung belastet wird.

Die vorliegende Erfindung löst die zuvor genannte Aufgabe durch die Merkmale des Patentanspruchs 1.

Erfindungsgemäß ist erkannt worden, dass ein Ultraschallverschweißen zum Verbinden von Endfalten einer Filterpatrone geeignet sein kann, wenn die Endfalten nur geeignet angeordnet sind. Darauf ist erkannt worden, dass bei einem getakteten Ultraschallschweißverfahren ein "fliegender" Amboß in einer Ultraschallschweißanlage verwendet werden muss, um fertige Filterpatronen problemlos aus dieser zu entnehmen. Konkret ist der Amboß notwendig, um eine einseitige Öffnung in der Ultraschallschweißananlage zu schaffen. Durch diese Öffnung kann eine durch überlappende Endfalten erzeugte, 360°-verschlossene Sternfiltergeometrie entnommen bzw. ausgeworfen werden.

Das Bestücken der Ultraschallschweißananlage und eine Materialhandhabung werden durch geeignete Materialführungen und -fixierungen realisiert. Bei einem kontinuierlichen Ultraschallschweißverfahren kann eine Frei-Arm-Vorrichtung zum Einsatz kommen, um der Ultraschallschweißananlage die beiden Endfalten überlappend zuzuführen und nach deren Verbindung die 360°-verschlossene Filterpatrone entnehmen zu können.

Der Begriff "360°-verschlossen" im Wortsinn dieser Schrift soll ausdrücken, dass ein Faltenbalg der Filterpatrone über seinen gesamten Umfang ringsum verschlossen ist. Die Endfalten des Faltenbalgs liegen dabei erfindungsgemäß nicht "Rücken-an-Rücken".

Bisher wurden Ultraschallverschweißungen immer von außen durchgeführt, wenn die Endfalten "Rücken-an-Rücken" liegen, da dies aufgrund geringerer technischer Komplexität der hierfür verwendeten Maschinen und Anlagen deutlich einfacher zu realisieren ist.

Die Endfalten könnten miteinander verschweißt sein. Hierdurch ist eine stoffschlüssige Verbindung der Endfalten erzeugbar.

Die Endfalten könnten miteinander ultraschallverschweißt sein. Ultraschallschweißverfahren sind rasch und kostengünstig durchführbar.

Die Endfalten könnten eine Wandung eines Zackens des gefalteten Filtermediums bilden. Hierdurch ragt die Anordnung aus einander überlappenden Endfalten nicht in radialer Richtung nach außen, sondern gegen eine Radialrichtung geneigt. Daher erfährt die Anordnung aus überlappenden Endfalten weniger Belastung bei einem von innen nach radial außen wirkenden Druck. Ein solcher Druck kann bei einer Druckstoßabreinigung auftreten.

Die Endfalten könnten jeweils eine Tiefe aufweisen, die geringer ist als die Tiefe der Wandung, die aus den überlappenden Endfalten gebildet wird. Die Endfalten werden bei der Herstellung eines Faltenbalgs stets mit einer niedrigeren Tiefe gefertigt. Die geschieht aus folgenden Gründen: Der Plissierer an der Plissieranlage kann das Ende eines Faltenbalgs besser erkennen und gezielt und treffsicher den Faltenbalg abschneiden. Wenn zwei Endfalten überlappend verklebt oder verschweißt werden, hat die daraus entstehende Wandung nach der Verklebung oder Verschweißung die gleiche Tiefe wie die restlichen Falten des das Prisma bildenden Faltenbalgs. Wenn die Endfalten die gleiche Plissiertiefe hätten wie alle anderen Falten des Faltenbalgs, würden überlappend verklebte oder verschweißte Falten eine Wandung bilden, die höher als alle anderen Wandungen ist, nämlich radial weiter nach außen ragen würde. Dies wäre ein optischer Mangel. Bei der Fertigkonfektionierung, beispielsweise beim Vergießen des zu einem Prisma geformten Faltenbalgs in Deckel und Boden, könnte es zu Problemen kommen. Es könnte durch Umknicken eine schiefe Endfalte entstehen. Durch ungleichmäßige Faltentiefen könnte das Aufbringen von Aussenbändern aufgrund der Überhöhung eines einzigen Zackens ein Problem darstellen. Der zuvor genannte Deckel und der Boden sind bevorzugt parallel zueinander, können jedoch bei einem schräg abgeschnittenen Prisma auch geneigt zueinander angeordnet sein.

Die hier beschriebene Filterpatrone ist für alle Verwendungen in der industriellen Luftfiltration geeignet, bei denen gefaltete Filterpatronen eingesetzt werden. Die hier beschriebene Filterpatrone kann insbesondere zur Entstaubung oder Luftfiltration verwendet werden.

Die hier beschriebene Filterpatrone kann bei allen ur- und umformenden industriellen Produktionsprozessen, wie beispielsweise Gießen, Schneiden oder Schweißen verwendet werden, da bei diesen große Mengen an Staub entstehen. Dieser Staub muss zum Schutz der Menschen, der Umwelt und auch der Maschinen aus der Luft abgeschieden werden.

In der Regel geschieht dies durch die Verwendung geeigneter Filter. Bei hohen Staubkonzentrationen in der Luft werden hierfür abzureinigende Luftfilter eingesetzt, beispielsweise in Patronenbauform

### Kurzbeschreibung der Zeichnung

In der Zeichnung zeigen
- Fig. 1: eine schematische Darstellung einer Schweißverbindung, bei welcher zwei Endfalten Rücken an Rücken aneinander liegen,
- Fig. 2: eine schematische Darstellung einer Schweißverbindung, bei welcher zwei Endfalten einander überlappen,
- Fig. 2a: eine schematische Darstellung der Schweißverbindung gemäß Fig. 2, wobei dargestellt ist, dass die Tiefe der Wandung eines Zackens, die aus zwei Endfalten gebildet ist, größer ist, als die Tiefe einer Endfalte,

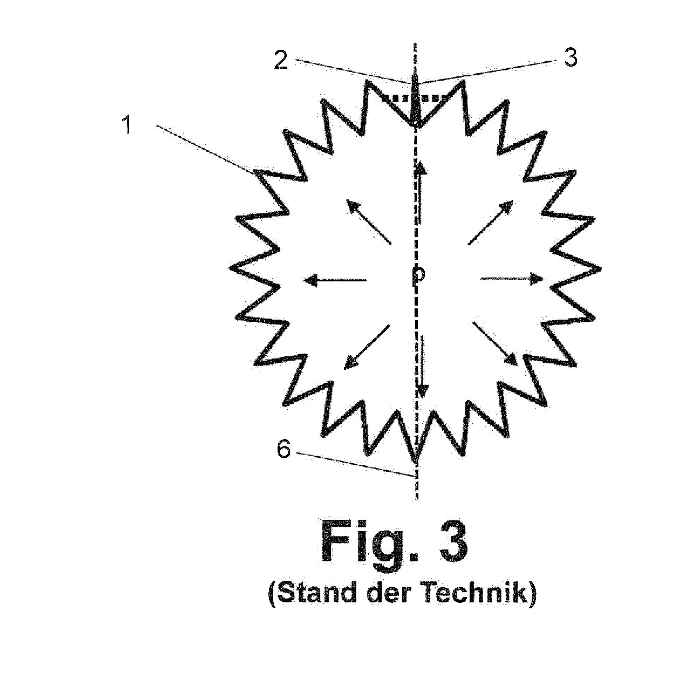

- Fig. 3: eine schematische Darstellung der Druckverteilung bei einer Druckstoßabreinigung, wobei eine Schweißnaht bei der Abreinigung eine Mischung aus Schäl- und Spaltbeanspruchung erfährt, und
- Fig. 4: eine schematische Darstellung der Druckverteilung bei einer Druckstoßabreinigung, wobei eine Schweißnaht bei der Abreinigung eine Zugbeanspruchung erfährt.

### Ausführung der Erfindung

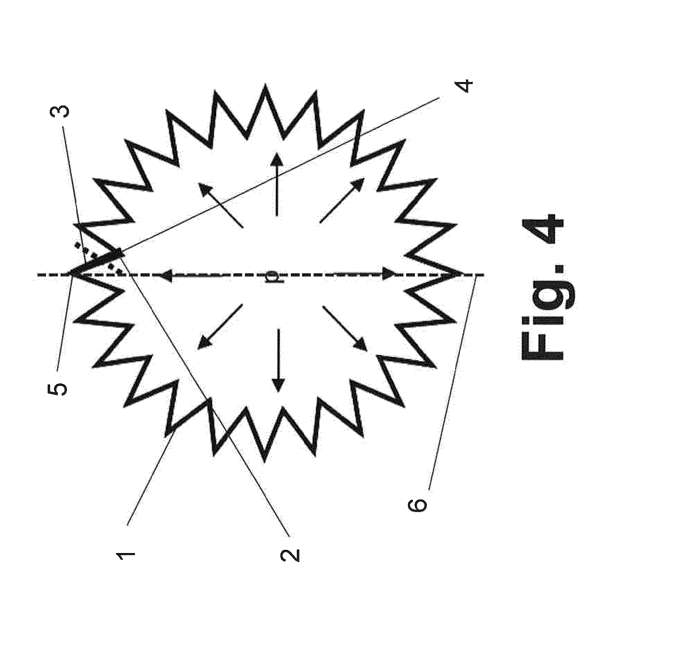

Fig. 4 zeigt eine Filterpatrone, umfassend ein gefaltetes Filtermedium 1, welches zu einem Prisma geformt ist und zwei Endfalten 2, 3 aufweist, die miteinander verbunden sind. Die Endfalten 2, 3 überlappen einander. Die Endfalten 2, 3 sind miteinander verschweißt. Die Endfalten 2, 3 sind miteinander ultraschallverschweißt. Die Endfalten 2, 3 bilden eine Wandung 4 eines Zackens 5 des gefalteten Filtermedium 1. Die Wandung 4 ist gegen eine Radialrichtung geneigt.

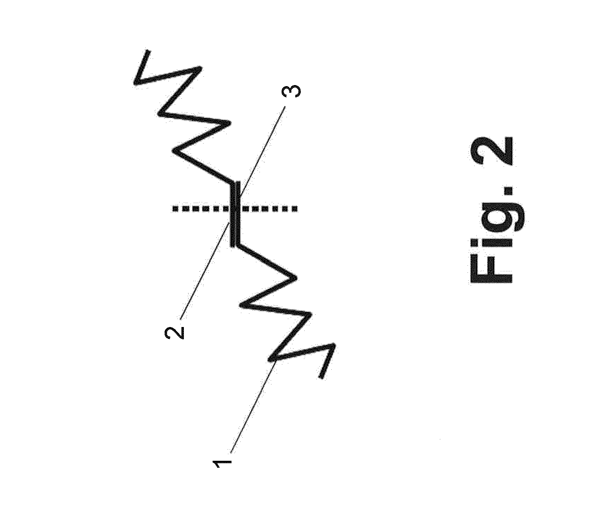

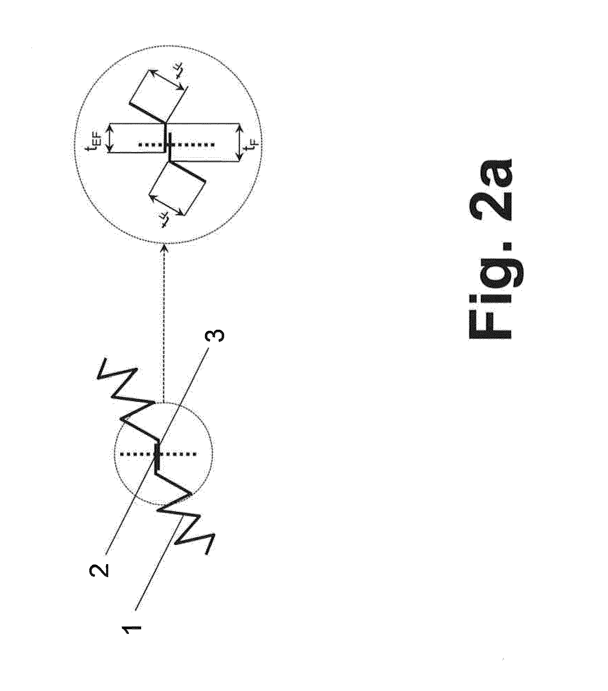

In Fig. 2a ist dargestellt, dass die Endfalten 2, 3 Tiefen t_{F} aufweisen, die geringer sind als die Tiefe t_{EF} der Wandung 4, die aus den einander überlappenden Endfalten 2, 3 gebildet wird. Insoweit weisen die Endfalten 2, 3 jeweils eine Tiefe auf, die geringer ist als die Tiefe der Wandung 4. Bevorzugt beträgt die Differenz zwischen der Tiefe der Wandung 4 und der Tiefe einer Endfalte 2, 3 ein bis zehn Millimeter.

## Patentansprüche

1. Filterpatrone, umfassend ein gefaltetes Filtermedium (1), welches zumindest bereichsweise zu einem Prisma geformt ist und zwei Endfalten (2, 3) aufweist, die miteinander verbunden sind,
**dadurch gekennzeichnet, dass**
die Endfalten (2, 3) einander überlappen.

2. Filterpatrone nach Anspruch 1, **dadurch gekennzeichnet, dass** die Endfalten (2, 3) miteinander verschweißt sind.

3. Filterpatrone nach Anspruch 1 oder 2, **dadurch gekennzeichnet, dass** die Endfalten (2, 3) miteinander ultraschallverschweißt sind.

4. Filterpatrone nach einem der voranstehenden Ansprüche, **dadurch gekennzeichnet, dass** die Endfalten (2, 3) eine Wandung (4) eines Zackens (5) des gefalteten Filtermedium (1) bilden.

5. Filterpatrone nach dem voranstehenden Anspruch, **dadurch gekennzeichnet, dass** die Endfalten (2, 3) jeweils eine Tiefe aufweisen, die geringer ist als die Tiefe der Wandung (4).
